# EUROPEAN PATENT APPLICATION

(11) **EP 2 197 152 A1**
(43) Date of publication of application: **16.06.2010**
(21) Application number: 08838536.4
(22) Date of filing: 28.09.2008
(51) Int. Cl.: H04L 12/14, H04L 29/06

(54) **METHOD AND DEVICE FOR OBTAINING THE CAPABILITY OF POLICY AND CHARGING ENFORCEMENT FUNCTION**

(30) Priority: 30.09.2007 CN 200710162771
(71) Applicant: Huawei Technologies Co., Ltd., Longgang District, Shenzhen Guangdong 518129 (CN)
(72) Inventor: HUANG, Shibi, Shenzhen Guangdong 518129 (CN); ZHAO, Peng, Shenzhen Guangdong 518129 (CN); MAO, Yuxin, Shenzhen Guangdong 518129 (CN); ZUO, Yu, Shenzhen Guangdong 518129 (CN); WANG, Fengbo, Shenzhen Guangdong 518129 (CN)
(74) Representative: Epping - Hermann - Fischer
(86) International application number: PCT/CN2008/072592
(87) International publication number: WO 2009/046678

(57) **Abstract**

A method for obtaining capabilities of a Policy and Charging Enforcement Function (PCEF) includes these steps: a Policy Control and Charging Rules Function (PCRF) obtains capability information of the PCEF; and the PCRF performs processing according to the capability information. A PCRF is also disclosed. With the present invention, the PCEF reports its capabilities in advance so that the PCRF makes policy decisions for a service or subscribes to appropriate application events from the PCEF when it knows the capabilities of the PCEF. This avoids possible subscription errors and decision failures arising when the PCRF is unable to know the capabilities of the PCEF.

## Description

### Field of the Invention

The present invention relates to communication technologies, and in particular, to a method and device for obtaining capabilities of a Policy and Charging Enforcement Function (PCEF).

### Background of the Invention

With the rapid development of wireless data services, higher requirements are imposed on the Quality of Service (QoS) and charging of data services. The 3rd Generation Partnership Project (3GPP) R7 standard combines two functions in R6, Service-Based Local Policy (SBLP) and Flow Based Charging (FBC), into Policy Control and Charging (PCC).

In the PCC architecture, the Policy Control and Charging Rules Function (PCRF) determines appropriate policies for services based on the policy context information obtained by different function entities, including the Application Function (AF), Policy and Charging Enforcement Function (PCEF), and Subscription Profile Repository (SPR), and delivers the policies to the PCEF for enforcement, thus realizing the policy control of QoS, gating, and charging. With development of networks and enrichment of services, more capabilities are realized on the PCEF. In certain scenarios, the PCRF needs to subscribe to application events or make policy decisions based on capabilities of the PCEF. The PCEF capabilities include application event detection capability, application control capability and network security defense capability.

With respect to the application event detection capability of the PCEF, the PCRF needs to know the application event detection capability supported by the PCEF so as to subscribe to a certain application event for a service; otherwise a subscription error will arise. For example, the PCRF subscribes to the File Transfer Protocol (FTP) application from the PCEF, requesting the PCEF to detect and report FTP application events. The PCEF, however, does not have the capability of FTP application event detection. Therefore, even if an FTP application is ongoing, the PCEF is unable to detect the event and report it to the PCRF.

With respect to the application control capability of the PCEF, the PCEF needs to have application control capabilities specific to characteristics of an application. For example, in the case of Bit Torrent (BT) download, the PCEF is required to have the capability of controlling the number of BT download connections. Therefore, when policy control is enforced on BT download, the PCRF needs to know whether the controlled PCEF is capable of controlling the number of BT download connections.

With respect to the network security defense capability of the PCEF, because access types and terminal operating systems vary, it is necessary to set and control the accessed contents and firewall modes in different ways. Therefore, when policy control is enforced on a user service, the PCRF needs to decide an appropriate control policy for the service according to the network security defense capability supported by the PCEF and other policy context information.

When implementing the present invention, however, the inventor finds that the prior art is subject to at least the following defects. In the prior art, although PCEF capabilities can be configured on the PCRF in advance, the implementation is not convenient: if the capabilities of the PCEF are added or reduced because of PCRF upgrade, etc., it is necessary to change the related configuration data of the PCRF. In addition, when one PCRF controls more than one PCEF in a network, because the capabilities of the PCEFs may vary, it is necessary to configure the capabilities of all PCEFs so that the configuration is inevitably complicated, followed with trouble in management and maintenance.

To sum up, at the time of subscribing to an application event or making a policy decision for a service, the PCRF needs to know capabilities of the PCEF, while advance configuration of PCEF capabilities on the PCRF leads to higher maintenance costs and inconvenient management. Therefore, a new method is in need to satisfy the above requirement.

### Summary of the Invention

Embodiments of the present invention provide a method and device for obtaining capabilities of a Policy and Charging Enforcement Function (PCEF) so that a Policy Control and Charging Rules Function (PCRF) delivers appropriate processing instructions according to capabilities of the PCEF.

A method for obtaining capabilities of a PCEF includes:
obtaining, by a PCRF, capability information of the PCEF; and
performing, by the PCRF, processing according to the capability information.

A computer program product includes computer program codes, which, when executed by a computer, enable the computer to execute steps in the preceding method for obtaining capabilities of a PCEF.

A computer readable storage medium stores computer program codes, which, when executed by a computer, enable the computer to execute steps in the preceding method for obtaining capabilities of a PCEF.

A PCRF includes:
a capability information receiving unit, adapted to obtain capability information
of a PCEF; and
a processing unit, connected to the capability information receiving unit, and
adapted to perform processing according to the capability information.

In embodiments of the present invention, the PCEF reports its capabilities in advance so that the PCRF makes policy decisions for a service or subscribes to appropriate application events from the PCEF when it knows the capabilities of the PCEF. This avoids possible subscription errors and decision failures arising when the PCRF is unable to know the capabilities of the PCEF in the prior art.

### Brief Description of the Drawings

FIG. 1 illustrates a Policy Control and Charging (PCC) architecture in a prior art;
FIG. 2 shows a flowchart of a method for obtaining capabilities of a Policy and Charging Enforcement Function (PCEF) according to a first embodiment of the invention;
FIG. 3 shows a flowchart of a method for obtaining capabilities of a PCEF according to a second embodiment of the invention;
FIG. 4 shows a flowchart of a method for obtaining capabilities of a PCEF according to a third embodiment of the invention;
FIG. 5 shows a flowchart of a method for obtaining capabilities of a PCEF according to a fourth embodiment of the invention; and
FIG. 6 illustrates a structure of a system for obtaining capabilities of a PCEF according to an embodiment of the invention.

### Detailed Description of the Embodiments

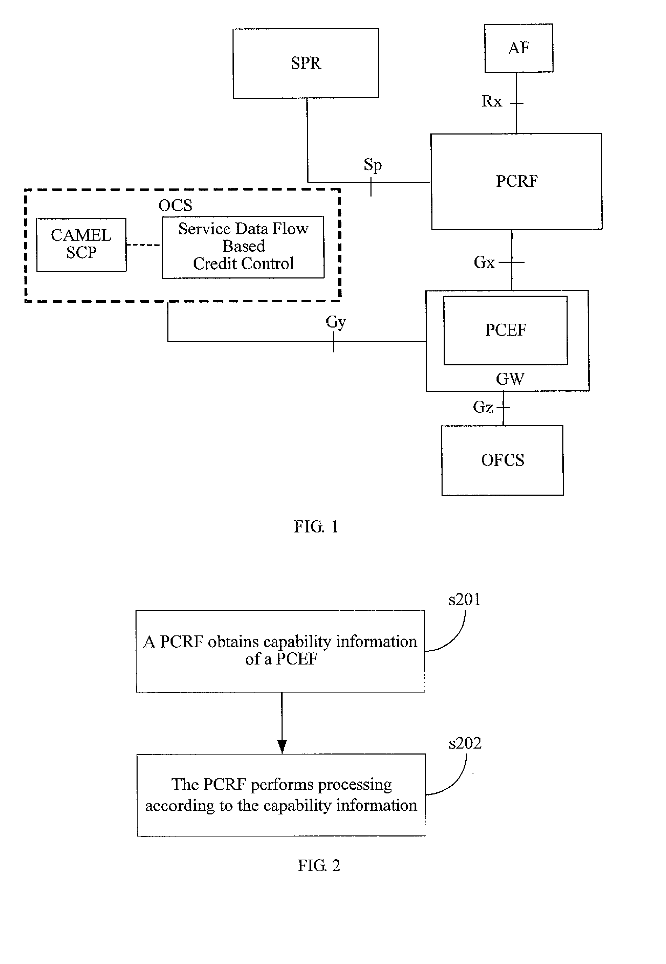

FIG. 1 illustrates a logical architecture of Policy Control and Charging (PCC), including a Policy Control and Charging Rules Function (PCRF), a Policy and Charging Enforcement Function (PCEF), an Application Function (AF), a Subscription Profile Repository (SPR), an Offline Charging System (OFCS) and an Online Charging System (OCS). The PCRF decides appropriate policies according to restrictions of the access network, operator policy, subscription data (obtained from the SPR) and ongoing service information (obtained from the AF) and delivers the policies to the PCEF, which will enforce the policies. The policies include rules for detecting a service data flow (to complete a certain service, such as the IP stream set of a voice service), whether to enable gating, the QoS of the service data flow and flow based charging rules. The PCEF enforces policies delivered or designated by the PCRF. In particular, the PCEF detects and measures the service data flow, guarantees the QoS of the service data flow, processes the user plane traffic, and triggers control plane session management. The AF provides the PCRF with dynamic session information of the application layer and the PCRF generates or modifies the corresponding rules dynamically according to the information. The OCS includes a Customized Applications for Mobile network Enhanced Logic Service Control Point (CAMEL SCP) and a Service Data Flow Based Credit Control.

Interfaces between functions shown in FIG. 1 include an Rx reference point and a Gx reference point. The Rx reference point uses the Diameter protocol defined by the Internet Engineering Task Force (IETF), and is adapted for the AF to deliver application layer related information, including but not limited to IP filter, bandwidth information for identification of a service data flow and bandwidth information required by an application or media. The Gx reference point uses the Diameter protocol defined by the IETF, is adapted to enable the PCRF to dynamically control PCC rules enforced by the PCEF, and provides functions, including creating, maintaining and terminating IP Connectivity Access Network (IP-CAN) sessions, requesting PCC rules by the PCEF from the PCRF, sending PCC rules by the PCRF to the PCEF, and negotiating an IP-CAN bearer setup mode.

As shown in FIG. 2, a method for obtaining capabilities of a PCEF according to the first embodiment of the invention includes the following steps.

Step s201: A PCRF obtains capability information of a PCEF, where the capability information includes but is not limited to: application event detection capability, and/or application control capability, and/or security defense capability. The step that the PCRF obtains capability information of the PCEF includes: the PCRF receives capability information of the PCEF; or, the PCRF sends a capability request to the PCEF, and the PCRF receives a capability response from the PCEF, which carries the capability information.

An example of PCEF capability description in the embodiment of the invention is like this: an Application-Deal-Capability AVP is defined to indicate the application processing capabilities supported by the PCEF, of a Grouped type, including application event detection capability and application control capability. The description is as follows: 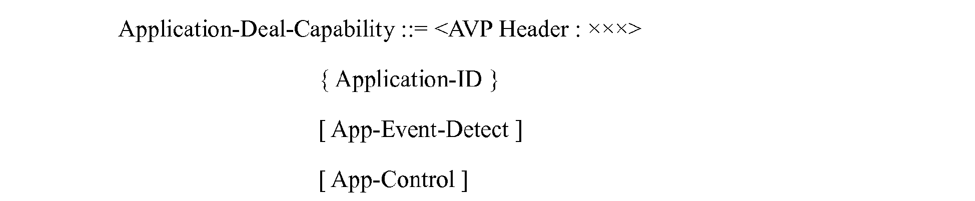 where, the Application-ID AVP is of an enumerated type and indicates the application type, and the values of the Application-ID AVP include: FTP application, Web application, streaming application, gaming application, Skype application, and BT download application; the App-Event-Detect AVP is of an enumerated type and indicates an application triggering event, i.e., upon what event the application event detection is triggered, and the values of the App-Event-Detect AVP include: START (0) indicating start of an application, STOP (1) indicating end of an application, and MODIFY (2) indicating modification to an application; the App-Control AVP is of an enumerated type and indicates the application control capability supported by the PCEF, i.e., the specific control capability for a specific application, and the values of the App-Control AVP include: Connect-Number (0) indicating that the PCEF supports control of the number of service connections, and Bit-Rate-Control (1) indicating that the PCEF supports control of the service transmission rate.

A Security-Defend-Capability AVP is defined to indicate the network security defense capability supported by the PCEF and is of an enumerated type. The PCEF has a user specific capability of network security defense. Values of the Security-Defend-Capability AVP include: ACL-Control (0) indicates the Access Control List (ACL) control function supported by the PCEF; Firewall-Control (1) indicates the firewall control capability supported by the PCEF.

To subscribe to events or make a policy decision for a service, the PCRF needs to obtain capabilities of the PCEF from the PCEF. For example, the PCEF may report the capabilities of the PCEF via a Diameter CCR (Credit-Control-Request) message. The message structure is as follows: 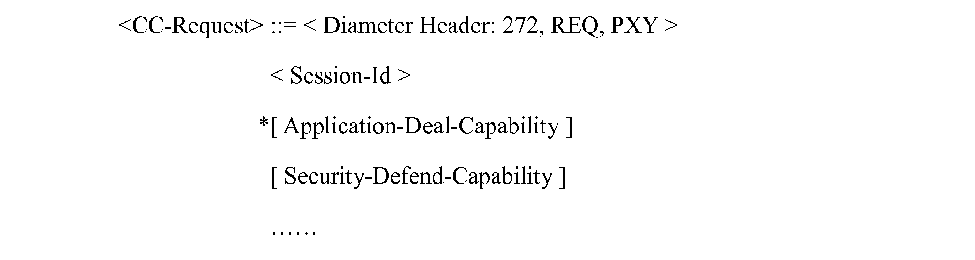 where, the "*" mark before Application-Deal-Capability means that the message may carry multiple such parameters, each indicating that the PCEF supports the event detection capability and application control capability for a specific application.

Step s202: The PCRF performs processing according to the capability information. When the capability information is application event detection capability, the PCRF subscribes to application events according to the application event detection capability.

When the capability information is application control capability, the PCRF delivers a corresponding application control policy to the PCEF according to the application control capability.

When the capability information is security defense capability, the PCRF delivers a corresponding security control policy to the PCEF according to the security defense capability.

The technical solution of the first embodiment of the invention is hereinafter detailed in different scenarios.

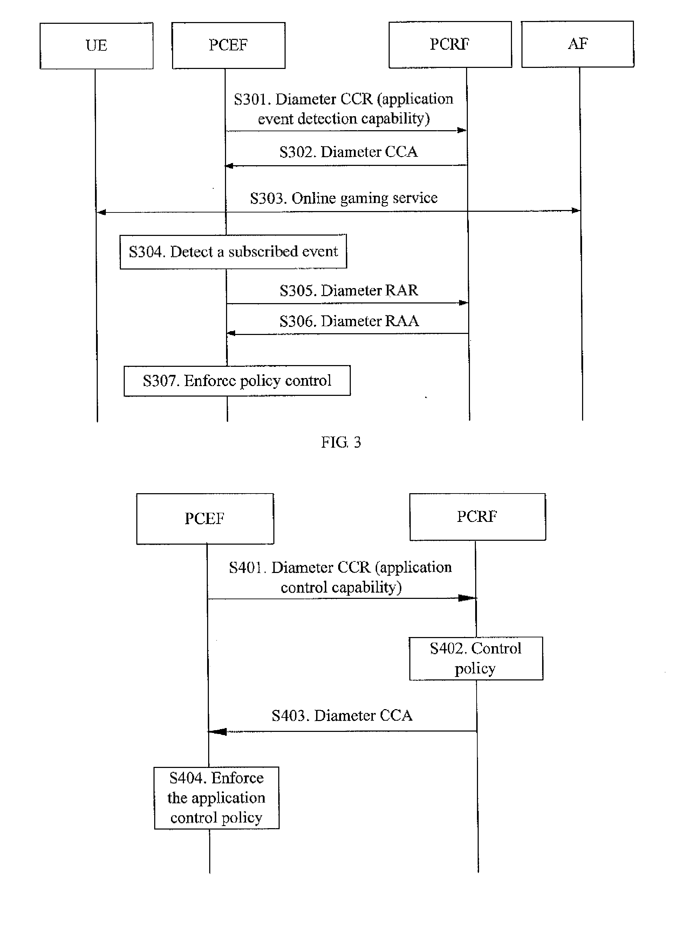

In the second embodiment of the invention, the PCEF reports its application event detection capability to the PCRF when an association is established between the PCEF and the PERF. Alternatively, the PCRF may send a capability request to the PCEF and the PCRF receives a capability response from the PCEF which carries the event detection capability information. The PCRF delivers subscription to gaming application events to the PCEF according to the application event detection capability of the PCEF; when a User Equipment (UE) starts the network gaining service, the PCEF detects the gaming application event and reports the event to the PCRF; the PCRF may enforce dynamic policy control on the gaming application according to the detection and reporting result. As shown in FIG. 3, the specific process in this embodiment includes the following steps.

Step s301: The PCEF sends a Diameter CCR message to the PCRF, which carries all application event detection capabilities supported by the PCEF. The message format is as follows: 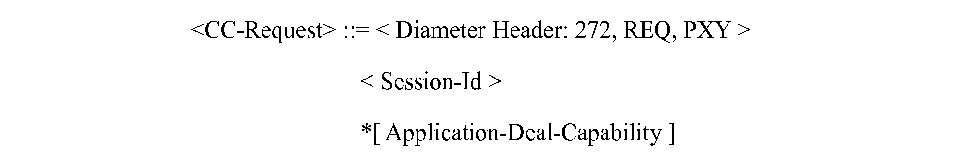 where, the Diameter CCR message carries multiple Application-Deal-Capability AVPs with respective values, indicating that the PCEF supports application processing capabilities specific to the Web application, FTP application, streaming application, gaming application and BT download application. The Application-Deal-Capability AVP describing the gaming application processing capability is structured as follows:

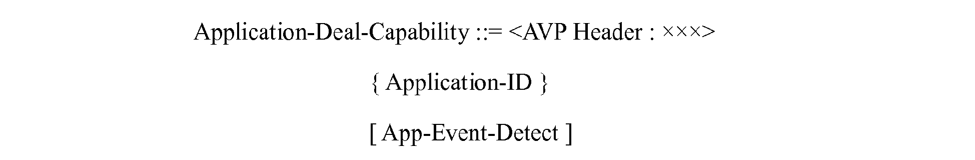

The Application-ID AVP indicates the gaming application; values of App-Event-Detect include START (0), STOP (1) and MODIFY (3), respectively indicating that the PCEF supports the detection of start, stop and modification events of the gaming application.

Step s302: The PCRF knows the PCEF supports detection of gaming application events according to the application event detection capability reported by the PCEF and sends a Diameter CCA (Credit-Control-Answer) to subscribe to the gaming application start event from the PCEF.

Step s303: The UE starts the online gaming service.

Step s304: The PCEF detects a subscribed application event.

Step s305: The PCEF reports the detected gaming application event to the PCRF via a Diameter RAR (Re-Auth-Request) message.

Step s306: The PCRF decides policies for the gaming application according to the reporting and other policy context information and delivers the policies to the PCEF via a Diameter RAA (Re-Auth-Answer) message.

Step s307: The PCEF enforces policy control on the gaming service according to the delivered policies.

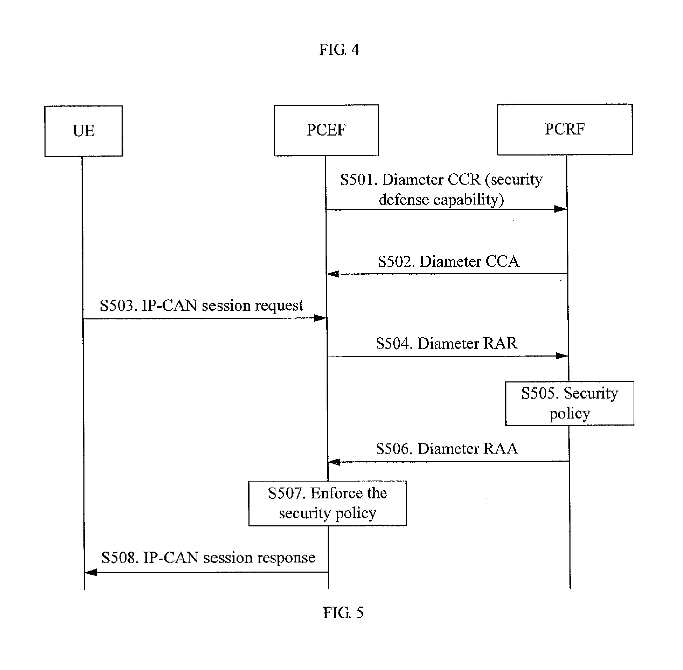

In the third embodiment of the invention, the PCEF reports its application control capability to the PCRF when an association is established between the PCEF and the PERF. Alternatively, the PCRF may send a capability request to the PCEF and the PCRF receives a capability response from the PCEF which carries the application control capability information. The PCRF decides appropriate control policies for the PCEF according to the application control capability of the PCEF with reference to other policy context information; the PCEF may enforce application control on services on the PCEF according to the control policies. As shown in FIG. 4, the specific process in this embodiment includes the following steps.

Step s401: The PCEF sends a Diameter CCR message to the PCRF, which carries the application control capability of the PCEF. The message format is as follows: 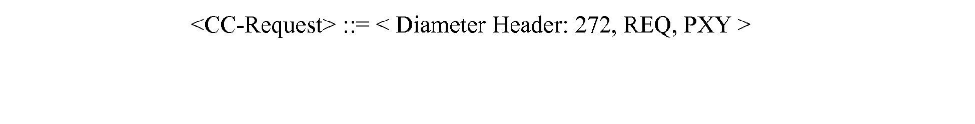 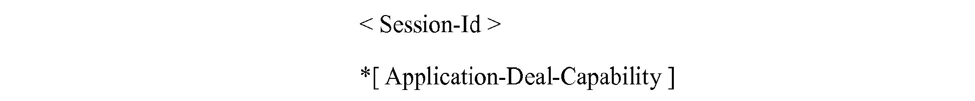 where, the Diameter CCR message carries multiple Application-Deal-Capability AVPs with respective values, indicating that the PCEF supports application processing capabilities specific to the Web application, FTP application, streaming application, gaming application and BT download application. The Application-Deal-Capability AVP that describes the application control capability is structured as follows:

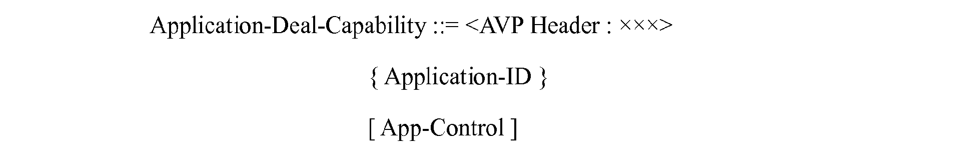

The Application-ID AVP indicates a specific application, for example, BT download; the value of App-Control is Connect-Number (0), indicating the PCEF supports control of the number of service connections.

Step s402: The PCRF decides an application control policy according to the application control capability reported by the PCEF with reference to other policy context information.

Step s403: The PCRF delivers the application control policy to the PCEF for enforcement via a Diameter CCA message.

Step s404: The PCEF enforces the application control policy to control the number of service connections on the PCEF according to the policy.

In the fourth embodiment of the invention, the PCEF reports its network security defense capability to the PCRF when an association is established between the PCEF and the PCRF. Alternatively, the PCRF may send a capability request to the PCEF and the PCRF receives a capability response from the PCEF, which carries the network security defense capability information. When the UE sets up an IP-CAN session, the PCRF decides a security policy according to the network security defense capability of the PCEF and capabilities (such as the operating system, operating system patches, and antivirus program) of the UE with reference to other policy context information and delivers the policy to the PCEF for enforcement; the PCEF provides security defense for the network according to the security policy. As shown in FIG. 5, the process includes the following steps.

Step s501: The PCEF reports its security defense capability to the PCRF via a Diameter CCR message: 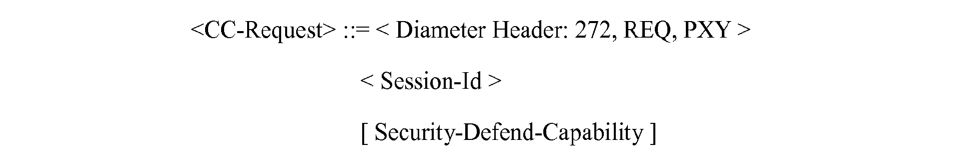 where, the values of Security-Defend-Capability are ACL-Control (0) and Firewall-Control (1) respectively indicating that the PCEF supports ACL based control and firewall mode selection.

Step s502: The PCRF returns a Diameter CCA to the PCEF.

Step s503: The UE sends an IP-CAN session request to the PCEF.

Step s504: Upon reception of the IP-CAN session request, the PCEF sends a Diameter RAR message to the PCRF, requesting a policy decision for the IP-CAN session. The IP-CAN is an access network such as GPRS and I-WLAN that maintains the continuity of IP services when a UE roams within the access network (the UE location changes). An IP-CAN bearer is an IP transport path (between the access network and the PCEF, GW) which has a specific rate, delay and bit error rate. In the case of GPRS, IP-CAN bearers match PDP contexts. An IP-CAN session is a connection relation between a UE and a Packet Data Network (PDN) identifier, such as the Internet. This connection relation is identified by the IP address and ID of the UE. As long as an IP address is allocated for the UE and can be identified by the IP network, the IP-CAN exists. An IP-CAN session may include one or more IP-CAN bearers.

Step s505: The PCRF decides the security policies for ACL control and firewall mode selection according to the network security defense capability of the PCEF and other policy context information.

Step s506: The PCRF delivers the security policies to the PCEF via a Diameter RAA message.

Step s507: The PCEF enforces the security policies.

Step s508: The PCEF sends an IP-CAN session response to the UE, notifying of successful setup.

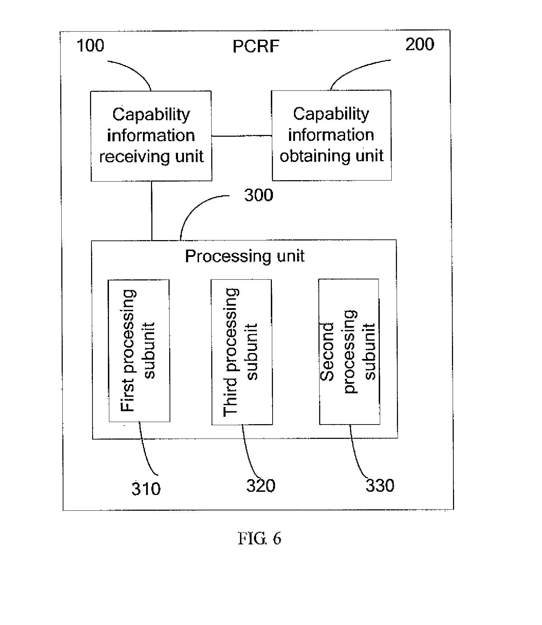

As shown in FIG. 6, a PCRF according to an embodiment of the invention includes: a capability information receiving unit 100, adapted to obtain capability information of a PCEF; a processing unit 300, connected to the capability information receiving unit 100, and adapted to perform processing according to the capability information; and a capability information requesting unit 200, adapted to send a capability information request to the PCEF so that the PCEF reports capability information. The capability information includes but is not limited to application event detection capability, and/or application control capability, and/or security defense capability.

Specific to different capability information, the processing unit 300 may further include: a first processing subunit 310, adapted to subscribe to application events from the PCEF according to the application event detection capability; and/or a second processing subunit 320, adapted to deliver an appropriate application control policy to the PCEF according to the application control capability; and/or a third processing subunit 330, adapted to deliver an appropriate security control policy to the PCEF according to the security defense capability.

In the embodiments of the invention, the PCEF reports its capabilities in advance so that the PCRF makes policy decisions for a service or subscribes to appropriate application events from the PCEF when it knows the capabilities of the PCEF. This avoids possible subscription errors and decision failures arising when the PCRF is unable to know the capabilities of the PCEF.

Through the preceding description of the embodiments of the present invention, it is understandable to those skilled in the art that the embodiments of the present invention may be implemented by hardware or by software in combination with a necessary hardware platform. Thus, the technical solution of the present invention may be made into software. The software may be stored in a computer readable storage medium (CD-ROM, USB disk, or mobile hard disk), and include several instructions that instruct a computer device (e.g., a personal computer, a server, or a network device, etc.) to perform the methods provided in each embodiment of the present invention.

Although the present invention has been described through several exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for obtaining capabilities of a Policy and Charging Enforcement Function, PCEF, comprising:
obtaining, by a Policy Control and Charging Rules Function, PCRF, capability information of the PCEF; and
performing, by the PCRF, processing according to the capability information.

2. The method of claim 1, wherein the step of obtaining the capability information of the PCEF comprises:
receiving, by the PCRF, a message reported by the PCEF which carries the capability information.

3. The method of claim 2, wherein before the step of receiving the message reported by the PCEF, the method further comprises:
sending, by the PCRF, a capability request to the PCEF.

4. The method of any one of claims 1-3, wherein the capability information comprises at least one of the following: application event detection capability, application control capability, and security defense capability.

5. The method of claim 4, wherein when the capability information is application event detection capability, the step of performing processing according to the capability information comprises:
subscribing, by the PCRF, to application events from the PCEF according to the application event detection capability.

6. The method of claim 4, wherein when the capability information is application control capability, the step of performing processing according to the capability information comprises:
delivering, by the PCRF, an appropriate application control policy to the PCEF according to the application control capability.

7. The method of claim 4, wherein when the capability information is security defense capability, the step of performing processing according to the capability information comprises:
delivering, by the PCRF, an appropriate security control policy to the PCEF according to the security defense capability.

8. The method of claim 1, wherein the step of obtaining the capability information of the PCEF comprises: receiving, by the PCRF, a Diameter Credit-Control-Request message reported by the PCEF, wherein the message carries all application event detection capabilities supported by the PCEF; and
the step of performing processing according to the capability information comprises: subscribing, by the PCRF, to a gaming application start event from the PCEF via a Diameter Credit-Control-Answer message according to the application event detection capabilities reported by the PCEF.

9. A computer program product, comprising computer program codes, which, when executed by a computer, enable the computer to execute steps in any one of claims 1-3 and claims 5-8.

10. A computer readable storage medium, storing computer program codes, which, when executed by a computer, enable the computer to execute steps in any one of claims 1-3 and claims 5-8.

11. A Policy Control and Charging Rules Function, PCRF, comprising:
a capability information receiving unit, adapted to obtain capability information of a Policy and Charging Enforcement Function, PCEF; and
a processing unit, connected to the capability information receiving unit, and adapted to receive the PCEF capability information obtained by the capability information receiving unit and perform processing according to the capability information.

12. The PCRF of claim 11, further comprising:
a capability information requesting unit, adapted to send a capability information request to the PCEF so that the PCEF reports capability information.

13. The PCRF of claim 11 or 12, wherein the capability information comprises at least one of the following: application event detection capability, application control capability and security defense capability.

14. The PCRF of claim 13, wherein the processing unit comprises:
a first processing subunit, adapted to subscribe to application events from the PCEF according to the application event detection capability; and/or
a second processing subunit, adapted to deliver an appropriate application control policy to the PCEF according to the application control capability; and/or
a third processing subunit, adapted to deliver an appropriate security control policy to the PCEF according to the security defense capability.
